# EUROPÄISCHE PATENTANMELDUNG

(11) **EP 4 650 142 A1**
(43) Veröffentlichungstag der Anmeldung: **19.11.2025**
(21) Anmeldenummer: 24175563.6
(22) Anmeldetag: 13.05.2024
(51) Int. Cl.: B29C 45/33, B29C 45/44, B29C 45/73

(54) **SPRITZGIESSWERKZEUG, SPRITZGIESSMASCHINE MIT DIESEM SPRITZGIESSWERKZEUG UND VERFAHREN HIERZU**

(71) Anmelder: Haidlmair Holding GmbH, 4542 Nussbach (AT)
(72) Erfinder: Sieberer-Kefer, Johannes-Peter, 4542 Nußbach (AT); Eckhart, Christian, 4560 Kirchdorf an der Krems (AT)
(74) Vertreter: Jell, Friedrich

(57) **Zusammenfassung**

Es wird ein Spritzgießwerkzeug (1), eine Spritzgießmaschine (2) mit diesem Spritzgießwerkzeug (1) und ein Verfahren hierzu gezeigt. Um formgenaue Spritzgießteile (4) standfest herstellen zu können, wird vorgeschlagen, dass die Flüssigkeitsleitung (10a, 10b) von einer starren Rohrleitung (11) mit zumindest einem Rohrteil (12, 13) ausgebildet wird, und dass die Formplatte (8) für die Rohrleitung (11) eine Aufnahme (14) aufweist, in der die Rohrleitung (11) ein- und, insbesondere bis zu einem Endrohrabschnitt (11a), ausschiebbar beweglich geführt ist.

## Beschreibung

Die Erfindung betrifft ein Spritzgießwerkzeug mit zumindest einer Kavität, mit einer zumindest abschnittsweise die Kavität begrenzenden Formhälfte, die eine Formplatte und zumindest ein gegenüber der Formplatte beweglich gelagertes Werkzeugteil, insbesondere Schieber und/oder Formbacke, aufweist, und mit einer Temperiereinrichtung zur zumindest bereichsweisen Temperierung des Spritzgießwerkzeugs, wobei die Temperiereinrichtung zumindest eine die Formplatte und das Werkzeugteil verbindende Flüssigkeitsleitung aufweist.

Um einen Verzug an gespritzten Formteilen zu vermeiden, ist es aus dem Stand der Technik bekannt, kavitätsausbildende Werkzeugteile an Spritzgießwerkzeugen durch Kühlen oder Erwärmen zumindest bereichsweise zu temperieren. Hierzu weisen diese Spritzgießwerkzeuge eine Temperiereinrichtung auf, die an den Formhälften des Spritzgießwerkzeugs eine Flüssigkeit, meist Wasser, führt. Beispielsweise verbindet die Temperiereinrichtung auch Werkzeugteile an einer Formhälfte des Spritzgießwerkzeugs, die beispielsweise für Entformungszweck an der Formhälfte beweglich gelagert sind. Als Verbindungen werden als Schlauch ausgebildete Flüssigkeitsleitung verwendet. Nachteilig bedarf es jedoch zur Führung dieser Schläuche aufwendige rinnenförmige Ausnehmungen an der Formhälfte, was die mechanische Stabilität des Spritzgießwerkzeugs schwächen kann. Zudem bedürften Schläuche aufgrund Verschleißerscheinungen häufig Wartungsarbeiten am Spritzgießwerkzeug, was die Standzeit des Spritzgießwerkzeugs vermindert. Hinzu kommt, dass ein ungewolltes Knicken der Schläuche die Temperierung des daran angeschlossenen Werkzeugteils beeinträchtigen kann, was den Ausschuss an der hergestellten Spritzgießteile nachteilig erhöht.

Die Erfindung hat sich daher die Aufgabe gestellt, ein Spritzgießwerkzeug der eingangs geschilderten Art derart konstruktiv zu verändern, dass mit hoher Standzeit formgenaue Spritzgießteile herstellen kann.

Die Erfindung löst die gestellte Aufgabe durch die Merkmale des Anspruchs 1.

Wird die Flüssigkeitsleitung von einer starren Rohrleitung mit zumindest einem Rohrteil ausgebildet, kann auf eine flexible und damit im Querschnitt nachteilig reduzierbare Schlauchverbindung als Flüssigkeitsleitung verzichtet werden, was schwankende Kühl- und/oder Heizleistungen am Spritzgießwerkzeug vermeiden und damit die Herstellung von formgenauen Formteilen sicherstellen kann.

Dies auch standfest, weil die Formplatte für die Rohrleitung eine Aufnahme aufweist, in der die Rohrleitung ein- und ausschiebbar beweglich geführt ist - beispielsweise ist Rohrleitung in der Aufnahme bis zu einem Endrohrabschnitt ausschiebbar beweglich geführt. So kann es nämlich mithilfe der Ausnehmung ermöglicht werden, das Rohr präzise an der Formplatte zu positionieren und auch passend zum beweglichen Werkzeugteil auszurichten. Dies vermeidet sowohl Biegebelastungen auf das Rohrteil als auch Leckage an Dichtflächen an der Flüssigkeitsleitung. Zudem kann mit der Ausnehmung ein physischer Schutz der Flüssigkeitsleitung geschaffen werden, was diese gegenüber mechanischen Beschädigungen und/oder Verschmutzung schützen kann.

Des Weiteren bedarf es zur Führung des Rohrteils keine rinnenförmigen Ausnehmungen an der Formhälfte, was deren mechanische Stabilität erhält und so die Standfestigkeit des Spritzgießwerkzeugs gewährleistet.

Das erfindungsgemäße Spritzgießwerkzeug ist daher nicht nur standfest ausgebildet, sondern kann auch Formteile mit hoher Formgenauigkeit herstellen.

Vorzugsweise weist das Rohrteil zumindest einen umlaufenden Außenflansch mit einer äußeren Mantelfläche zur Führung des Rohrteils auf. Hierzu ist vorstellbar, dass das Rohrteil an dessen Rohrende diesen umlaufenden Flansch aufweist, was die Konstruktion weiter vereinfachen kann.

So kann dieser Außenflansch beispielsweise dazu beitragen, eine bessere Abdichtung zwischen dem Rohrteil und der Ausnehmung zu schaffen, um so Leckagen weiter zu reduzieren. Dies beispielsweise über eine enge Passform des Außenflansches an der Seitenwand. Außerdem kann durch den Außenflansch das Rohrteil leichter in die Ausnehmung eingeführt oder daraus entfernt werden, was den Herstellungsaufwand reduzieren und/oder auch Wartungsarbeiten erleichtern kann.

Weist das Rohrteil ein Führungsband auf, das an der äußeren Mantelfläche des Außenflansches angeordnet ist, kann dies die Genauigkeit der Führung des Rohrteils in der Ausnehmung erhöhen und damit die Gefahr einer Leckage an der Flüssigkeitsleitung weiter reduziert werden. Zudem kann das Führungsband Verschleiß und Reibung zwischen Ausnehmung und Rohrteil reduzieren, was die Lebensdauer und damit der Standfestigkeit des Spritzgießwerkzeugs verlängern kann.

Hierbei ist vorstellbar, dass das Führungsband diese Mantelfläche umläuft und/oder das Führungsband in einer Nut an diese Mantelfläche angeordnet ist. Oftmals wird auch ein umlaufendes Führungsband als Führungsring bezeichnet.

Vorzugsweise weist das Rohrteil in dessen Wand zumindest einen durchgehenden Kanal zum Druckausgleich zwischen dessen Rohraußen- und Rohrinnenseite auf, um damit den Kraftaufwand zum Ein- und Ausschieben des Rohrteils zu erleichtern. Insbesondere aber kann durch diesen Druckausgleich eine Dichtung gegenüber Druckschwankungen geschützt werden, was deren Leckage-Sicherheit erhöhen und eine Beeinträchtigung deren Lebensdauer vermeiden kann. Die Standfestigkeit des Spritzgießwerkzeugs ist damit beispielsweise weiter verbessert.

Dieser Druckausgleich kann weiter verbessert werden, wenn eine Kanalöffnung des Kanals an der Rohraußenseite zumindest abschnittsweise vom Außenflansch ausgebildet wird. Damit kann ein sich an der Rückseite des Flansches aufbauender Flüssigkeitsdruck unmittelbar ausgeglichen werden. Dies kann bei einem Ausschieben des Rohrteils ein Überdruck und beim Einschieben des Rohrteils ein Unterdruck sein.

Die Abdichtung der Flüssigkeitsleitung kann beispielsweise weiter verbessert werden, wenn die Aufnahme eine Dichtung aufweist, die am, insbesondere äußeren, Rohrteil zum flüssigkeitsdichten Abdichten anliegt. Hierzu ist vorstellbar, dass die Aufnahme im Bereich deren offenen Ende diese Dichtung aufweist. Diese Dichtung kann beispielsweise ein Dichtring sein.

Vorzugsweise weist die Aufnahme ein Führungsband auf, das am, insbesondere äußeren, Rohrteil anliegt. Dies kann die Führung des Rohrteils weiter verbessern. Vorstellbar ist, dass dieses Führungsband im Bereich deren offenen Endes der Aufnahme vorgesehen ist.

Beispielsweise weist hierzu die Aufnahme zumindest eine umlaufende Nut an deren Seitenwand auf, in der die Dichtung und/oder das Führungsband vorgesehen ist. Vorstellbar ist auch, dass die Aufnahme für die Dichtung und für das Führungsband jeweils eine umlaufende Nut an deren Seitenwand aufweist.

Die Konstruktion an der Temperiereinrichtung kann weiter vereinfacht werden, wenn die Aufnahme eine Aussparung in der Formplatte und einen an diese Aussparung anschließenden Kopf aufweist.

Um die Aufnahme in der Formplatte in den Abmessungen kleiner zu halten, kann vorgesehen sein, dass die Rohrleitung teleskopierbar ausgebildet ist und hierzu mehrere ineinander schiebbare Rohrteile aufweist. Zudem können damit kompakte Bauverhältnisse am Spritzgießwerkzeugs erreicht werden.

Vorzugsweise weist jeweils das, zu einem anschließenden inneren Rohrteil äußere Rohrteil eine Dichtung auf, die am inneren Rohrteil zum flüssigkeitsdichten Abdichten anliegt, um damit die Leckagefreiheit an der Flüssigkeitsleitung weiter zu verbessern. Die Dichtung kann beispielsweise im Bereich des freien Endes des äußeren Rohrteils vorgesehen werden, was die Konstruktionsverhältnisse weiter vereinfachen kann. Diese Dichtung kann beispielsweise ein Dichtring sein.

Auch kann diese Dichtung standfest am Rohrteil vorgesehen werden, indem beispielsweise die Dichtung in einer umlaufenden Nut an der Wand des äußeren Rohrteils angeordnet ist.

Beispielsweise ist das innerste Rohrteil am Werkzeugteil fest angeschlossen.

Vorzugsweise begrenzt das Werkzeugteil die Kavität zumindest abschnittsweise. Vorzugsweise weist die Flüssigkeitsleitung eine Flüssigkeit, insbesondere Wasser, auf, um damit das Werkzeugteil zu kühlen oder zu heizen.

Das erfindungsgemäße Spritzgießwerkzeug kann sich insbesondere für eine Spritzgießmaschine eignen.

Die Erfindung hat sich zudem die Aufgabe gestellt, ein Verfahren zu schaffen, mit dem zuverlässig formgenaue Spritzgießteile hergestellt werden können.

Die Erfindung löst die gestellte Aufgabe durch die Merkmale des Anspruchs 16.

Indem das erfindungsgemäße Spritzgießwerkzeug oder die Spritzgießmaschine mit diesem Spritzgießwerkzeug verwendet wird, bei dem das Spritzgießwerkzeug über die Temperiereinrichtung mit einer an die Formplatte und an das Werkzeugteil angeschlossenen Flüssigkeitsleitung zumindest bereichsweise temperiert wird, können reproduzierbar und standfest formgenaue Spritzgießteile hergestellt werden.

In den Figuren ist beispielsweise der Erfindungsgegenstand anhand eines Ausführungsbeispiels näher dargestellt. Es zeigen
- Fig. 1: eine aufgerissene Frontansicht auf ein teilweise dargestelltes Spritzgießwerkzeug in dessen geschlossener Lage,
- Fig. 2: eine Seitenansicht ausschließlich auf eine erste Formhälfte des nach Fig. 1 dargestellten Spritzgießwerkzeugs,
- Fig. 3: eine aufgerissene Frontansicht ausschließlich auf die erste Formhälfte des Spritzgießwerkzeugs in dessen offener Lage,
- Fig. 4: eine Seitenansicht der Fig. 2 und
- Fig. 5: eine geschnittene Längsansicht auf eine nach Fig. 1 bis 4 dargestellte Flüssigkeitsleitung des Spritzgießwerkzeugs.

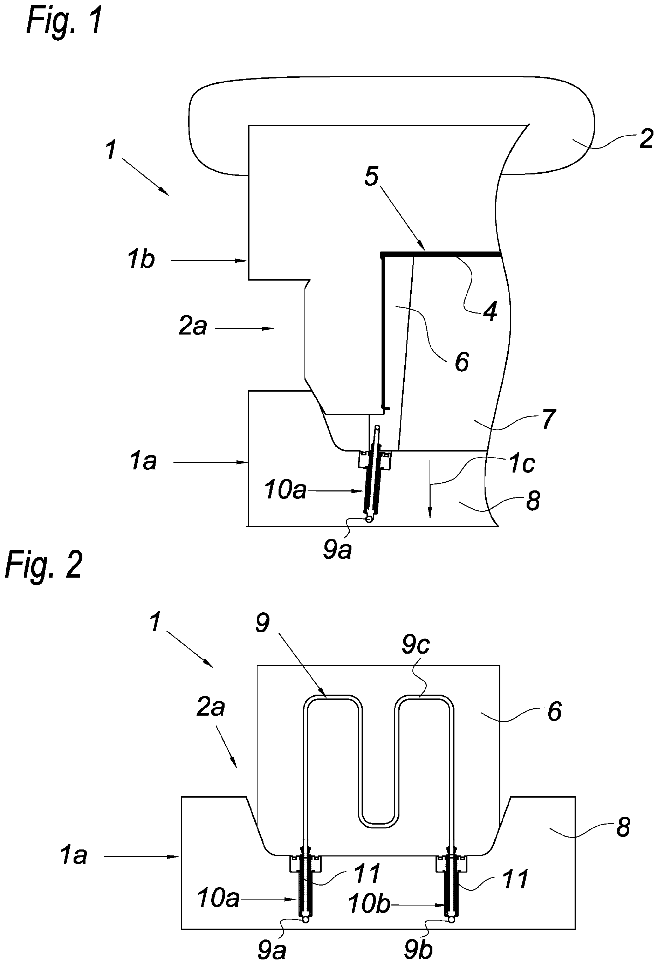

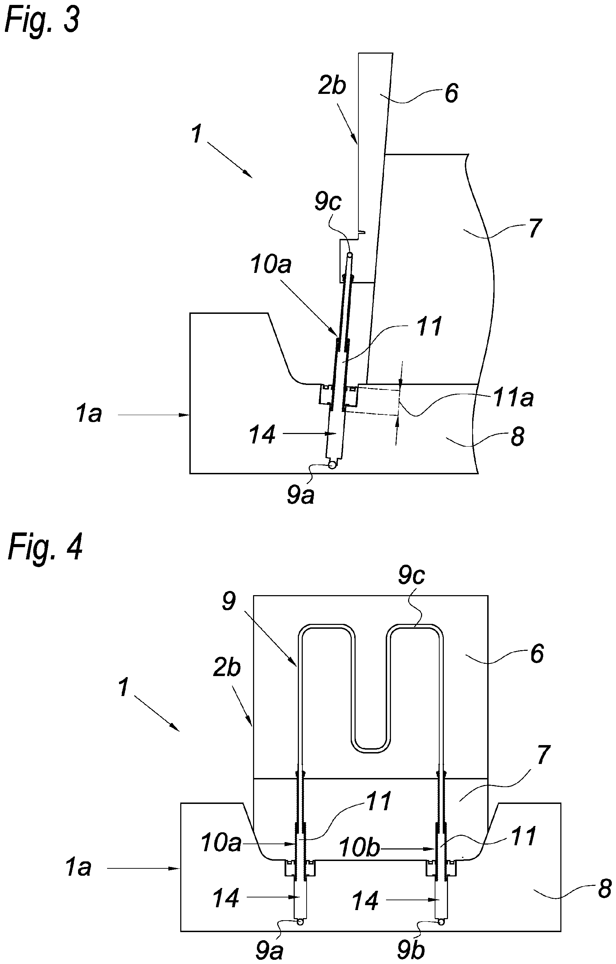

Nach den Fig. 1 ist ein Spritzgießwerkzeug 1 einer angedeutet dargestellten Spritzgießmaschine 2 dargestellt, wobei dieses Spritzgießwerkzeug 1 in den Figuren 1 und 2 in dessen geschlossener Lage 2a und in den Figuren 3 und 4 in seiner offenen Lage 2b zum Entformen eines Spritzgießteils 4 in einer Kavität 5 gezeigt wird.

Das Spritzgießwerkzeug 1 weist zwei Formhälften 1a und 1b auf, von denen die erste Formhälfte 1a von der zweiten feststehenden Formhälfte 1b zum Öffnen des Spritzgießwerkzeug 1 in Entformungsrichtung 1c und damit zum Entformen des Spritzgießteils 4 wegbewegt werden kann. Die zweite Formhälfte 1b (Düsenseite) ist an der Spritzgießmaschine 2 ortsfest angeordnet.

Die beiden Formhälften 1a, 1b begrenzen zwischen sich die Kavität 5 und bilden diese somit gemeinsam aus, wenn sich das Spritzgießwerkzeug 1 in seiner geschlossener Lage 2a befindet.

An der ersten Formhälfte 1a ist ein Werkzeugteil 6 beweglich gelagert, und zwar an einem als Kern ausgeführten Stützelement 7 an der Formplatte 8 der ersten Formhälfte 1a. Das Werkzeugteil 6 begrenzt die Kavität 5 abschnittweise und bildet damit eine Werkzeugwirkfläche an der Kavität 5 aus. Das Werkzeugteil 6 kann hierbei ein Schieber sein, der beispielsweise zum Entformen eines Hinterschnitts am Spritzgießteil 4 verwendet wird. Es ist aber auch vorstellbar, dass das Werkzeugteil 6 als Formbacke ausgeführt ist, was nicht näher dargestellt wurde.

Es ist vorstellbar, was nicht dargestellt ist, dass die Formplatte 8 einteilig oder mehrteilig ist. Zudem kann die Formplatte 8 zumindest einen, beispielsweise auswechselbaren, Einsatz zur Begrenzung der Kavität 5 aufweisen, was ebenso nicht dargestellt worden ist.

Das Spritzgießwerkzeug 1 weist eine Temperiereinrichtung 9 auf, mit dem das Spritzgießwerkzeug 1 zumindest bereichsweise temperiert, beispielsweise gekühlt und/oder erwärmt werden kann. Dies insbesondere an den Werkzeugwirkflächen, die die Kavität 5 ausbilden. Dies auch bereichsweise mit unterschiedlichen Temperaturen, um so ein gleichmäßiges Abkühlen des Spritzgießteils 4 für eine verzugsfreie Formgebung zu gewährleisten. Hierzu weist die Temperiereinrichtung 9 zumindest zwei Flüssigkeitsleitungen 10a, 10b zur Führung einer Flüssigkeit auf. Diese Flüssigkeitsleitungen 10a, 10b verbinden die Formplatte 8 und das Werkzeugteil 6, und zwar sind diese entweder an eine Zulauf- oder eine Ablaufleitung 9a, 9b der Formplatte 8 sowie beide an eine Temperierleitung 9c des Werkzeugteils 6 angeschlossen. Damit kann die Werkzeugwirkfläche des Werkzeugteils 6 temperiert werden.

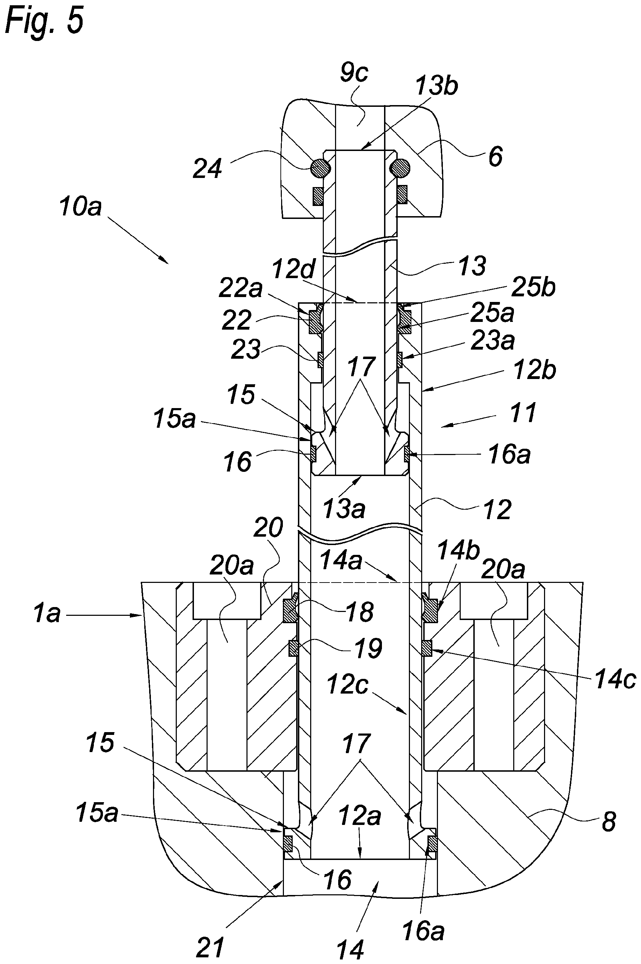

Erfindungsgemäß sind die Flüssigkeitsleitungen 10a, 10b standfest und leckagefrei. Dies, indem die Flüssigkeitsleitungen 10a, 10b jeweils von einer starren Rohrleitung 11 mit -im Ausführungsbeispiel- zwei Rohrteilen 12, 13 ausgebildet werden, wie in Fig. 5 im Detail zu erkennen. Die zwei Rohrteile 12, 13 sind zudem ineinander schiebbar - die Rohrleitung 11 ist damit teleskopierbar ausgebildet. Das erste Rohrteil 12 bildet hierfür einen Anschlag für das zweite Rohrteil 13 aus.

Zudem weist die Formplatte 8 für jede Rohrleitung 11 je eine Aufnahme 14 auf, in der die betreffende Rohrleitung 11 ein- und bis zu einem Endrohrabschnitt 11a ausschiebbar beweglich geführt ist, wie dies in Fig. 3 zu erkennen ist.

Die Rohrleitung 11 kann damit präzise zum beweglichen Werkzeugteil 6 geführt werden und damit standfest dieses Werkzeugteil 6 an die Temperiereinrichtung 9 anschließen.

Hohe Leckagefreiheit wird auch dadurch erreicht, indem die Rohrteile 12, 13 an deren Rohrenden 12a, 13a einen umlaufenden Außenflansch 15 mit einer äußeren Mantelfläche 15a zur Führung des betreffenden Rohrteils 12, 13 aufweist. An dieser Mantelfläche 15a ist eine umlaufende Nut 16a vorgesehen, wie dies beispielsweise für das Rohrteil 12 in Fig. 5 erkannt werden kann. Die Rohrteile 12, 13 weisen zudem je ein Führungsband 16 auf, die in der entsprechenden Nut 16a an Mantelfläche 15a vorgesehen sind und damit eine präzise Führung der Rohrteile 12, 13 gewährleisten - und zwar einerseits des äußeren Rohrteils 12 in der Ausnehmung 14 und andererseits das innere Rohrteil 13 am äußeren Rohrteil 12.

Für eine leichte Beweglichkeit der Rohrteile 12, 13 weisen diese mehrere, nämlich vier, durchgehende Kanäle 17 jeweils zwischen deren Rohraußenseite 12b und Rohrinnenseite 12c auf. Die Kanäle 17 sind nahe am diesbezüglichen Außenflansch 15 vorgesehen, und zwar so, dass eine Kanalöffnung 17a des Kanals 17 an der Rohraußenseite 12b abschnittsweise vom Außenflansch 15 ausgebildet wird, wie in Fig. 5 zu erkennen.

Zur Abdichtung des ersten und damit äußeren Rohrteils 12 weist die Aufnahme 14 im Bereich deren offenen Ende 14a, eine Dichtung 18 auf, die von einem Dichtring ausgebildet wird. Diese Dichtung 18 liegt am äußeren Rohrteil 12 zum flüssigkeitsdichten Abdichten eines Dichtspalts zwischen Aufnahme 14 und Rohrteil 12 an und stellt in diesem Bereich Leckagefreiheit sicher. Zudem weist die Aufnahme 14 zur präzisen Führung des äußeren Rohrteils 12 im Bereich deren offenen Ende 14a ein Führungsband 19 auf, das am äußeren Rohrteil 12 anliegt.

Dichtung 18 und Führungsband 19 sind in je in einer umlaufenden Nut 14b, 14c an der Seitenwand der Aufnahme 14 vorgesehen, und zwar an einem Kopf 20, der in eine Aussparung 21 der Formplatte 14 befestigt ist. Dies mit nicht nach Fig. 5 nicht näher dargestellten Schrauben, die in Befestigungsöffnungen 20a am Kopf 20 eingreifen. Der Kopf 20 bildet einen Anschlag für das erste Rohrteil 12 bzw. für die Rohrleitung 11 aus, was damit den Endrohrabschnitt 11a in der Aufnahme 14 bestimmt.

Zur Abdichtung der Rohrteile 12, 13 weist das, zum anschließen inneren Rohrteil 13 äußere Rohrteil 12 im Bereich dessen freien Ende 12d eine Dichtung 22, nämlich Dichtring, auf. Diese Dichtung 22 ist in einer Nut 22a an der Rohrinnenseite 12c des Rohrteils 12 angeordnet und liegt am inneren Rohrteil 13 zum flüssigkeitsdichten Abdichten eines Dichtspalts zwischen diesen beiden Rohrteile 12, 13 flüssigkeitsdicht an. Zudem ist in diesem Bereich auch ein Führungsband 23 ebenso in einer Nut 23a an der Rohrinnenseite 12c des Rohrteils 12 vorgesehen.

Das innere und damit innerste Rohrteil 13 am Werkzeugteil 6 fest angeschlossen, und zwar am dessen anderen Rohrende 13b wie in den Figuren 1 bis 5 zu erkennen. Eine Ringdichtung 24 des Rohrteils 13 schafft einen flüssigkeitsdichten Anschluss an das Werkzeugteil 6.

Vorzugsweise weist die Dichtung 18, 22, insbesondere Ringdichtung, eine umlaufende Dichtlippe 25a und einen umlaufenden Abstreifer 25b auf, wie das in Fig. 5 zu erkennen ist und beispielsweise bei der Dichtung 22 eingezeichnet wurde. Es ist aber auch eine Wellendichtung vorstellbar.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Spritzgießwerkzeug (1) mit zumindest einer Kavität (5), mit einer zumindest abschnittsweise die Kavität (5) begrenzenden Formhälfte (1a), die eine Formplatte (8) und zumindest ein gegenüber der Formplatte (8) beweglich gelagertes Werkzeugteil (6), insbesondere Schieber und/oder Formbacke, aufweist, und mit einer Temperiereinrichtung (9) zur zumindest bereichsweisen Temperierung des Spritzgießwerkzeugs (1), wobei die Temperiereinrichtung (9) zumindest eine die Formplatte (8) und das Werkzeugteil (6) verbindende Flüssigkeitsleitung (10a, 10b) aufweist, **dadurch gekennzeichnet, dass** die Flüssigkeitsleitung (10a, 10b) von einer starren Rohrleitung (11) mit zumindest einem Rohrteil (12, 13) ausgebildet wird, und dass die Formplatte (8) für die Rohrleitung (11) eine Aufnahme (14) aufweist, in der die Rohrleitung (11) ein- und, insbesondere bis zu einem Endrohrabschnitt (11a), ausschiebbar beweglich geführt ist.

2. Spritzgießwerkzeug nach Anspruch 1, **dadurch gekennzeichnet, dass** das Rohrteil (12, 13), insbesondere an dessen Rohrende, zumindest einen umlaufenden Außenflansch (15) mit einer äußeren Mantelfläche (15a) zur Führung des Rohrteils (12, 13) aufweist.

3. Spritzgießwerkzeug nach Anspruch 1 oder 2, **dadurch gekennzeichnet, dass** das Rohrteil (12, 13) ein Führungsband (16) aufweist, das an der äußeren Mantelfläche (15a) des Außenflansches (15), insbesondere diese Mantelfläche (15a) umlaufend und/oder insbesondere in einer Nut (16a) an diese Mantelfläche (15a), angeordnet ist.

4. Spritzgießwerkzeug nach einem der Ansprüche 1 bis 3, **dadurch gekennzeichnet, dass** das Rohrteil (12, 13) in dessen Wand zumindest einen durchgehenden Kanal (17) zum Druckausgleich zwischen dessen Rohraußen- (12b, 12c) und Rohrinnenseite (12b, 12c) aufweist.

5. Spritzgießwerkzeug nach Anspruch 4, **dadurch gekennzeichnet, dass** eine Kanalöffnung (17a) des Kanals (17) an der Rohraußenseite (12b) zumindest abschnittsweise vom Außenflansch (15) ausgebildet wird.

6. Spritzgießwerkzeug nach einem der Ansprüche 1 bis 5, **dadurch gekennzeichnet, dass** die Aufnahme (14), insbesondere im Bereich deren offenen Ende, eine Dichtung (18), insbesondere Dichtring, aufweist, die am, insbesondere äußeren, Rohrteil (12) zum flüssigkeitsdichten Abdichten anliegt.

7. Spritzgießwerkzeug nach einem der Ansprüche 1 bis 6, **dadurch gekennzeichnet, dass** die Aufnahme (14), insbesondere im Bereich deren offenen Ende, ein Führungsband (19) aufweist, das am, insbesondere äußeren, Rohrteil (12) zu dessen Führung anliegt

8. Spritzgießwerkzeug nach Anspruch 6 oder 7, **dadurch gekennzeichnet, dass** die Aufnahme (14) zumindest eine umlaufende Nut (14c, 14d) an deren Seitenwand aufweist, in der die Dichtung (18) und/oder das Führungsband (19) vorgesehen ist oder sind.

9. Spritzgießwerkzeug nach einem der Ansprüche 1 bis 8, **dadurch gekennzeichnet, dass** die Aufnahme (14) eine Aussparung (21) in der Formplatte (8) und einen an diese Aussparung (21) anschließenden Kopf (20) aufweist.

10. Spritzgießwerkzeug nach einem der Ansprüche 1 bis 9, **dadurch gekennzeichnet, dass** die Rohrleitung (11) teleskopierbar ausgebildet ist und hierzu mehrere ineinander schiebbare Rohrteile (12, 13) aufweist.

11. Spritzgießwerkzeug nach Anspruch 10, **dadurch gekennzeichnet, dass** jeweils das, zu einem anschließenden inneren Rohrteil (13) äußere Rohrteil (12), insbesondere im Bereich dessen freien Ende, eine Dichtung (22), insbesondere Dichtring, aufweist, die am inneren Rohrteil (13) zum flüssigkeitsdichten Abdichten anliegt.

12. Spritzgießwerkzeug nach Anspruch 11, **dadurch gekennzeichnet, dass** die Dichtung (22) in einer umlaufenden Nut (23) an der Wand des äußeren Rohrteils (12) angeordnet ist.

13. Spritzgießwerkzeug nach einem der Ansprüche 10 bis 12, **dadurch gekennzeichnet, dass** das innerste Rohrteil (13) am Werkzeugteil (6) fest angeschlossen ist.

14. Spritzgießwerkzeug nach einem der Ansprüche 1 bis 13, **dadurch gekennzeichnet, dass** das Werkzeugteil (6) die Kavität (5) zumindest abschnittsweise begrenzt.

15. Spritzgießmaschine mit einem Spritzgießwerkzeug (1) nach einem der Ansprüche 1 bis 14.

16. Verfahren zur Herstellung eines Spritzgießteils (4) mit einem Spritzgießwerkzeug (1) nach einem der Ansprüche 1 bis 14 oder mit einer Spritzgießmaschine nach Anspruch 15, bei dem das Spritzgießwerkzeug (1) über die Temperiereinrichtung (9) mit einer die Formplatte (8) und das Werkzeugteil (6) verbindenden Flüssigkeitsleitung (10a, 10b) zumindest bereichsweise temperiert wird.
